# EUROPEAN PATENT APPLICATION

(11) **EP 4 782 963 A1**
(43) Date of publication of application: **29.07.2026**
(21) Application number: 24866777.6
(22) Date of filing: 29.02.2024
(51) Int. Cl.: G06F 1/26

(54) **COMPUTING DEVICE**

(30) Priority: 20.09.2023 CN 202311230767
(71) Applicant: xFusion Digital Technologies Co., Ltd., Henan 450000 (CN)
(72) Inventor: KONG, Weikai, Zhengzhou, Henan 450000 (CN); ZHANG, Zhiming, Zhengzhou, Henan 450000 (CN)
(74) Representative: Isarpatent
(86) International application number: PCT/CN2024/079310
(87) International publication number: WO 2025/060350

(57) **Abstract**

Embodiments of the present application provide a computing device, including: a first power supply circuit, a second power supply circuit, a power supply control circuit, a first load circuit, and a second load circuit. An output terminal of the first power supply circuit is electrically connected to a first input terminal of the power supply control circuit; an output terminal of the second power supply circuit is electrically connected to a second input terminal of the power supply control circuit; a first output terminal of the power supply control circuit is electrically connected to an input terminal of the first load circuit; and a second output terminal of the power supply control circuit is electrically connected to an input terminal of the second load circuit. The power supply control circuit is configured to, determine whether an output voltage of the second power supply circuit is greater than a preset voltage; and in a case where the output voltage of the second power supply circuit is greater than the preset voltage, control the first power supply circuit to stop supplying power to the first load circuit, and control the second power supply circuit to supply power to the first load circuit. Only one power supply branch is used to supply power to a load at the same time, and a DC/DC circuit does not need to be configured, thereby saving a circuit area and shortening a development cycle.

## Description

This application claims priority to Chinese Patent Application No. 202311230767.9 filed with the China National Intellectual Property Administration on September 20, 2023, entitled "COMPUTING DEVICE", which is incorporated herein by reference in its entirety.

### TECHNICAL FIELD

Embodiments of the present application relate to the field of server technologies, and in particular to a computing device.

### BACKGROUND

A data processing unit (data processing unit, DPU) in a server is configured to perform computing operations on data. When an output power of a power supply circuit is sufficient, a single power supply circuit can be used to supply power, thereby ensuring normal operation of the DPU.

However, in a power supply scenario where the output power of a single power supply circuit is insufficient, a first power supply circuit and a second power supply circuit are required to supply power simultaneously.

When both the first power supply circuit and the second power supply circuit supply power to a load, current sharing between the two power supply circuits is required, that is, power supply currents of the two power supply circuits need to be proportionally output according to their respective output powers, to prevent reverse current from one circuit into the other.

In the related art, direct current/direct current (direct current/direct current, DC/DC) conversion circuits are respectively provided on two power supply units to control the power supply currents, which increases circuit complexity, occupies a large circuit area, and prolongs a development cycle.

### SUMMARY

Embodiments of the present application provide a computing device, which is capable of enabling only one power supply unit to supply power to a load without providing a current sharing circuit, thereby saving circuit area and shortening a development cycle.

Embodiments of the present application provide a computing device, including: a first power supply circuit, a second power supply circuit, a power supply control circuit, a first load circuit, and a second load circuit; an output terminal of the first power supply circuit is electrically connected to a first input terminal of the power supply control circuit; an output terminal of the second power supply circuit is electrically connected to a second input terminal of the power supply control circuit; a first output terminal of the power supply control circuit is electrically connected to an input terminal of the first load circuit; and a second output terminal of the power supply control circuit is electrically connected to an input terminal of the second load circuit; the power supply control circuit is configured to, determine whether an output voltage of the second power supply circuit is greater than a preset voltage; and in a case where the output voltage of the second power supply circuit is greater than the preset voltage, control the first power supply circuit to stop supplying power to the first load circuit, and control the second power supply circuit to supply power to the first load circuit.

The computing device provided in the embodiments of the present application includes two power supply branches. The two power supply branches do not supply power to a same load, and only one power supply branch supplies power to the load at the same time through hardware. In this way, DC/DC circuits are not required to be provided on the two power supply branches, and current sharing control is not required, thereby simplifying a circuit structure, saving the circuit area, and shortening the development cycle.

In a possible implementation, the power supply control circuit includes a first power supply branch, a second power supply branch, and a first controller; the output terminal of the first power supply circuit is electrically connected to an input terminal of the first power supply branch, and an output terminal of the first power supply branch is electrically connected to the input terminal of the second load circuit; the output terminal of the second power supply circuit is electrically connected to an input terminal of the second power supply branch, and an output terminal of the second power supply branch is electrically connected to the input terminal of the first load circuit; a first output terminal of the first controller is electrically connected to a control terminal of the first power supply branch, and a second output terminal of the first controller is electrically connected to a control terminal of the second power supply branch; the power supply control circuit being configured to, in a case where the output voltage of the second power supply circuit is greater than the preset voltage, control the first power supply branch to stop supplying power to the first load circuit, and control the second power supply circuit to supply power to the first load circuit, includes: the first controller being configured to, in a case where the output voltage of the second power supply circuit is greater than the preset voltage, control the first power supply branch to be turned off and control the second power supply branch to be turned on.

The computing device provided in the embodiments of the present application includes two power supply branches. Based on a comparison result between the output voltage of the second power supply circuit and the preset voltage, one of the power supply circuits may be selected to supply power to the load. That is, the two power supply branches do not supply power to a same load, and only one power supply branch supplies power to the load at the same time through hardware. In this way, DC/DC circuits are not required to be provided on the two power supply branches, and current sharing control is not required, thereby simplifying a circuit structure, saving the circuit area, and shortening the development cycle.

In a possible implementation, the first power supply branch includes a first controllable switch and a second controllable switch, and the second power supply branch includes a third controllable switch and a fourth controllable switch; a first terminal of the first controllable switch is electrically connected to the output terminal of the first power supply circuit, a second terminal of the first controllable switch is electrically connected to a second terminal of the second controllable switch, and a first terminal of the second controllable switch is electrically connected to the input terminal of the second load circuit; a first terminal of the third controllable switch is electrically connected to the output terminal of the second power supply circuit, a second terminal of the third controllable switch is electrically connected to a second terminal of the fourth controllable switch, and a first terminal of the fourth controllable switch is electrically connected to the input terminal of the first load circuit; the first controller includes two first output terminals, the two first output terminals of the first controller are respectively electrically connected to a control terminal of the first controllable switch and a control terminal of the second controllable switch; the first controller includes two second output terminals, the two second output terminals of the first controller are respectively electrically connected to a control terminal of the third controllable switch and a control terminal of the fourth controllable switch; and the first controller being configured to, in a case where the output voltage of the second power supply circuit is greater than the preset voltage, control the first power supply branch to be turned off and control the second power supply branch to be turned on, includes: the first controller being configured to, in a case where the output voltage of the second power supply circuit is greater than the preset voltage, control the first controllable switch and the second controllable switch to be turned off, and control the third controllable switch and the fourth controllable switch to be turned on.

A type of the controllable switch is not specifically limited in the embodiments of the present application, as long as it is a switch that can be either controlled to be turned on or controlled to be turned off. In order to ensure that the power supply branch can be turned off in both directions, that is, in order to block bidirectional currents, each power supply branch is required to include two controllable switches connected in reverse series. Each controllable switch includes a body diode, that is, the body diode serves as an anti-parallel diode of the controllable switch to block a reverse current. The diodes of the two controllable switches connected in series are connected in reverse series, thereby completely blocking the current.

In a possible implementation, the first power supply branch includes a first soft-start circuit and a second controllable switch, and the second power supply branch includes a second soft-start chip and a fourth controllable switch; an input terminal of the first soft-start circuit is electrically connected to the output terminal of the first power supply circuit, an output terminal of the first soft-start circuit is electrically connected to a second terminal of the second controllable switch, and a first terminal of the second controllable switch is electrically connected to the input terminal of the second load circuit; an input terminal of the first soft-start circuit is electrically connected to the output terminal of the second power supply circuit, an output terminal of the second soft-start circuit is electrically connected to a second terminal of the fourth controllable switch, and a first terminal of the fourth controllable switch is electrically connected to the input terminal of the first load circuit; the first output terminal of the first controller controls a control terminal of the second controllable switch; and the second output terminal of the first controller controls a control terminal of the fourth controllable switch; the first controller being configured to, in a case where the output voltage of the second power supply circuit is greater than the preset voltage, control the first power supply branch to be turned off and control the second power supply branch to be turned on, includes: the first controller being configured to, in a case where the output voltage of the second power supply circuit is greater than the preset voltage, control the first controllable switch and the second controllable switch to be turned off, and control the third controllable switch and the fourth controllable switch to be turned on.

In the computing device provided in the embodiments of the present application, the first controller may be achieved by using a power path control chip. That is, the soft-start chip and the power path control chip may be used to achieve automatic selection between the two power supply branches. In this way, implementation is simpler, control logic is simplified, and costs are lower. An operating principle of the soft-start chip is that the soft-start chip is controlled by an enable signal. The soft-start chip is provided with an enable signal triggered by an external source. When the enable signal is active, the controllable switch in the soft-start chip is turned on. When the enable signal is inactive, the controllable switch in the soft-start chip is turned off.

In a possible implementation, the power supply control circuit further includes an inverter circuit; an input terminal of the inverter circuit is electrically connected to a first terminal or a second terminal of the second soft-start circuit; an output terminal of the inverter circuit is electrically connected to a control terminal of the first soft-start circuit; a first power supply terminal of the inverter circuit is electrically connected to the output terminal of the first power supply circuit; and a second power supply terminal of the inverter circuit is electrically connected to ground.

To ensure that only one power supply branch is turned on at the same time, an operating state of the first soft-start chip is opposite to that of the second soft-start chip. In the embodiments of the present application, the operating state of the second soft-start chip is used to constrain the enable signal of the first soft-start chip, so that when the second soft-start chip operates, the first soft-start chip does not operate. In the embodiments of the present application, the inverter circuit is used to implement a mutual exclusion constraint between the two soft-start chips. The enable signal of the first soft-start chip is generated based on the output voltage (or output voltage) of the second soft-start chip and the output voltage of the first power supply circuit. When the second soft-start chip has an output, the enable signal of the first soft-start chip is inactive. Therefore, even if the first power supply circuit has a voltage, the first power supply branch may not be turned on to supply power to the first load circuit.

In a possible implementation, the power supply control circuit includes a first power supply branch, a second power supply branch, and an inverter circuit; the first power supply branch includes a first soft-start circuit and a first diode; the second power supply control branch includes a second soft-start circuit and a second diode; an input terminal of the first soft-start circuit is electrically connected to the output terminal of the first power supply circuit, an output terminal of the first soft-start circuit is electrically connected to a first terminal of the first diode, and a second terminal of the first diode is electrically connected to the input terminal of the second load circuit; an input terminal of the second soft-start circuit is electrically connected to the output terminal of the second power supply circuit, an output terminal of the second soft-start circuit is electrically connected to a first terminal of the second diode, and a second terminal of the second diode is electrically connected to the input terminal of the first load circuit; an input terminal of the inverter circuit is electrically connected to a first terminal or a second terminal of the second soft-start circuit; an output terminal of the inverter circuit is electrically connected to a control terminal of the first soft-start circuit; a first power supply terminal of the inverter circuit is electrically connected to the output terminal of the first power supply circuit; and a second power supply terminal of the inverter circuit is electrically connected to ground.

In the computing device provided in the embodiments of the present application, each power supply branch includes a soft-start circuit and a diode that are connected in series. Compared with the controllable switch, the diode has a lower cost, does not require control, and can automatically achieve a reverse current blocking function. Because the diode and a diode in the soft-start circuit are connected in reverse series, bidirectional current blocking of the power supply branch can be achieved.

In a possible implementation, the inverter circuit includes a first resistor, a second resistor, a third resistor, a fourth resistor, a fifth resistor, and a fifth switch; a first terminal of the first resistor is electrically connected to the output terminal of the first power supply circuit; a second terminal of the first resistor, a first terminal of the second resistor, a first terminal of the fifth resistor, and a first terminal of the fifth switch are electrically connected; a first terminal of the third resistor is electrically connected to a control terminal of the second soft-start circuit; and a second terminal of the third resistor, a first terminal of the fourth resistor, and a control terminal of the fifth switch are electrically connected; a second terminal of the second resistor, a second terminal of the fourth resistor, and a second terminal of the fifth switch are electrically connected to ground; and a second terminal of the fifth resistor is electrically connected to the control terminal of the first soft-start circuit.

When the second soft-start chip operates, the output voltage thereof is applied to the control terminal of the fifth switch, so that the fifth switch is turned on. As a result, an enable signal is inactive, and the first soft-start chip does not operate. The second power supply circuit supplies power to the first load circuit via the second power supply branch. When the second soft-start chip does not operate, the fifth switch is turned off. As a result, ENC is at a high level, the enable signal is active, and the first soft-start chip operates. The first power supply circuit supplies power to the first load circuit via the first power supply branch.

In a possible implementation, the power supply control circuit further includes a third soft-start circuit; an input terminal of the third soft-start circuit is electrically connected to the output terminal of the first power supply circuit; and an output terminal of the third soft-start circuit, the input terminal of the first soft-start circuit, and the input terminal of the second load circuit are electrically connected.

The third soft-start chip is used to prevent an inrush current to subsequent components when the first power supply circuit is powered on. For example, when the first power supply circuit is hot-plugged, the third soft-start chip may prevent the inrush current.

In a possible implementation, the power supply control circuit is further configured to, in a case where the output voltage of the second power supply circuit is less than or equal to the preset voltage, control the first power supply circuit to supply power to the first load circuit and the second load circuit.

In the computing device provided in the embodiments of the present application, the second power supply circuit is preferentially used to supply power to a load corresponding to the first load circuit, and when the output voltage of the second power supply circuit is relatively low, the first power supply circuit is used to supply power to the load corresponding to the first load circuit.

In a possible implementation, the first load circuit and the second load circuit are located on a data processing unit DPU board card.

Since the DPU has high requirements for power supply, two power supply circuits are provided for the DPU, and only one of the power supply circuits supplies power to the DPU at a time, without necessarily configuring a current sharing circuit, thereby saving an area of the DPU board card.

### BRIEF DESCRIPTION OF DRAWINGS

FIG. 1 is a schematic diagram illustrating a computing device according to an embodiment of the present application;
FIG. 2A is a schematic diagram illustrating another computing device according to an embodiment of the present application;
FIG. 2B is a schematic diagram illustrating another computing device according to an embodiment of the present application;
FIG. 3 is a schematic diagram illustrating another computing device according to an embodiment of the present application;
FIG. 4 is a schematic diagram illustrating another computing device according to an embodiment of the present application;
FIG. 5 is a schematic diagram illustrating an enable signal generating circuit of a first soft-start chip according to an embodiment of the present application;
FIG. 6 is a schematic diagram illustrating another computing device according to an embodiment of the present application; and
FIG. 7 is a flowchart illustrating a method for controlling a computing device according to an embodiment of the present application.

### DESCRIPTION OF EMBODIMENTS

An application scenario of a computing device provided in embodiments of the present application is not specifically limited. For example, a server is used as an example for description of the computing device, and a type of the server is not specifically limited. For example, the computing device may be a rack server or an edge server. The server may be located in a data center, or may be located in another area, and is not specifically limited in the embodiments of the present application.

The server is a type of computing device that runs faster and has a higher load than a general computer. The server provides computing or application services for other clients (such as PCs and smartphones) in a network. The server has high-speed CPU computing power, long-term reliable operation, powerful external data throughout, and better scalability. Based on form factors, servers are classified into rack servers, blade servers, tower servers, and rack-scale servers.

A board is a commonly used component in a server. The board is a general term, and may be a mainboard, a power management board, or a network data switch board. The board is provided with an electrical connector, and the board may be plugged into another electrical component (for example, another board) via the electrical connector.

The server generally includes a board and a power supply. The power supply is configured to supply power to each load of the board. The embodiments of the present application do not specifically limit a voltage level provided by the power supply for the board. For example, a direct current 12 V is used as an example for description.

A type of the board is not specifically limited in the embodiments of the present application. The board may be a mainboard, or may be another board.

The mainboard is a circuit board in a server. The mainboard may include components such as a central processing unit (central processing unit, CPU), a memory, a controller, and an electrical connector. The CPU may be electrically connected to a peripheral device via the electrical connector. For example, the CPU is electrically connected to a device such as a network interface card or a graphics card via the electrical connector. The controller may be one or more of a micro controller unit (micro controller unit, MCU), a complex programming logic device (complex programming logic device, CPLD), or a field programmable gate array (field programmable gate array, FPGA).

The server generally includes various types of loads, such as a CPU, a fan, a baseboard manager controller (baseboard manager controller, BMC), a data processing unit (data processing unit, DPU), and a memory. A specific type of the memory is not specifically limited in the embodiments of the present application. For example, the memory includes, but is not limited to a dual-inline-memory-module (DIMM, dual-inline-memory-modules). In addition, the mainboard may include one or more CPUs.

The BMC is an essential component of the server, and is configured to monitor running statuses of the server, such as temperature, fan speed, power supply status, and operating system status. The BMC operates independently of the server and is not affected by the server. The BMC may perform operations such as firmware upgrade, checking machine devices, and remotely controlling machine startup on the server when the server is not powered on, and may also record key logs when the server crashes.

Conventionally, a rack-scale server is generally powered by at least two AC/DC power supplies that provide mutual redundancy. In a server, an input DC power supply is divided into several power supply units on a server board via soft-start circuits or fuses. Each power supply unit is subject to a corresponding soft-start circuit or fuse, such that an output power thereof is limited. To prevent some power supply units from triggering overcurrent protection due to reverse current flow or current imbalance, the load in the rack-scale server generally draws power from only one power supply unit. In scenarios where two or more power supply units are required to supply power simultaneously, two or more direct current/direct current (direct current/direct current, DC/DC) circuits need to be configured. The DC/DC circuits are configured to support current sharing, so as to prevent a reverse current therebetween or prevent a single power supply unit from triggering overcurrent protection. However, the DC/DC circuit hardware is complex, occupies a large circuit area, and complicates current sharing control.

In order to make those skilled in the art better understand the technical solutions provided in the embodiments of the present application, the technical solutions provided in the embodiments of the present application are provided in conjunction with accompanying drawings.

The computing device provided in the embodiments of the present application includes two power supply branches. The two power supply branches do not supply power to a same load, and only one power supply branch supplies power to the load through hardware at the same time. In this way, the DC/DC circuits do not need to be configured on the two power supply branches, and current sharing control is not required, thereby simplifying a circuit structure, reducing a circuit area and shortening a development cycle.

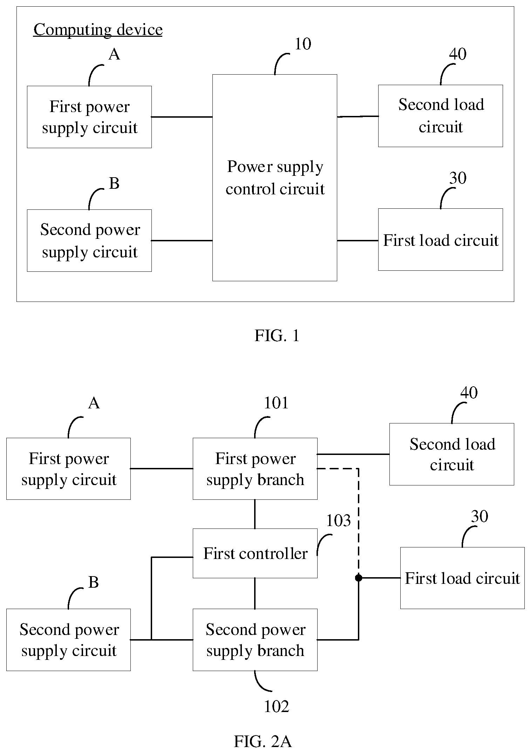

As shown in FIG. 1, FIG. 1 is a schematic diagram illustrating a computing device according to an embodiment of the present application.

The computing device provided in the embodiment of the present application includes a first power supply circuit A, a second power supply circuit B, a power supply control circuit 10, a first load circuit 30, and a second load circuit 40.

An output terminal of the first power supply circuit A is electrically connected to a first input terminal of the power supply control circuit 10.

An output terminal of the second power supply circuit B is electrically connected to a second input terminal of the power supply control circuit 10.

A first output terminal of the power supply control circuit 10 is electrically connected to an input terminal of the first load circuit 30.

A second output terminal of the power supply control circuit 10 is electrically connected to an input terminal of the second load circuit 40.

The power supply control circuit 10 is configured to,
determine whether an output voltage of the second power supply circuit B is greater than a preset voltage; and
in a case where the output voltage of the second power supply circuit B is greater than the preset voltage, control the first power supply circuit A to stop supplying power to the first load circuit 30, and control the second power supply circuit B to supply power to the first load circuit 30.

In a possible implementation, for example, a sum of a maximum power required by the first load circuit 30 and a maximum power required by the second load circuit 40 is greater than a maximum output power of the first power supply circuit A, and is less than a sum of the maximum output power of the first power supply circuit A and a maximum output power of the second power supply circuit B. The maximum output power of the first power supply circuit A is greater than or equal to the maximum output power of the second power supply circuit B; and the maximum output power of the second power supply circuit B is greater than or equal to the maximum power required by the first load circuit.

In a possible implementation, the first load circuit 30 and the second load circuit 40 are located on a DPU board card.

A quantity of loads included in the first load circuit 30 is not specifically limited in the embodiment of the present application, and may be one or more. The load may include, but is not limited to an FPGA.

In the computing device provided in the embodiment of the present application, the first power supply circuit A is continuously powered, and a power source of the first power supply circuit A may be derived from a power supply cable.

A power source of the second power supply circuit B may be derived from various interfaces, for example, a PCIe interface, so as to facilitate user connection.

When a power supply power of the first power supply circuit is insufficient (an output power of the first power supply circuit is less than a sum of powers required by the first load circuit and the second load circuit), and the second power supply circuit B is powered, the second power supply circuit B is used to supply power to the first load circuit. The first power supply circuit A may supply power to the second load circuit 40. When the second power supply circuit B is unpowered, the first power supply circuit A supplies power to the first load circuit and the second load circuit.

A quantity of loads included in the second load circuit is not specifically limited in the embodiment of the present application, and may be one or more. For example, the load may include, but is not limited to a drive and a CPLD.

As shown in FIG. 2A, FIG. 2A is a schematic diagram illustrating another computing device according to an embodiment of the present application.

The power supply control circuit provided in the embodiment of the present application includes a first power supply branch 101, a second power supply branch 102, and a first controller 103.

The output terminal of the first power supply circuit A is electrically connected to an input terminal of the first power supply branch 101, and an output terminal of the first power supply branch 101 is electrically connected to the input terminal of the second load circuit 40.

The output terminal of the second power supply circuit B is electrically connected to an input terminal of the second power supply branch 102, and an output terminal of the second power supply branch 102 is electrically connected to the input terminal of the first load circuit 30.

A first output terminal of the first controller 103 is electrically connected to a control terminal of the first power supply branch 101, and a second output terminal of the first controller 103 is electrically connected to a control terminal of the second power supply branch 102.

The power supply control circuit being configured to, in a case where the output voltage of the second power supply circuit is greater than the preset voltage, control the first power supply branch to stop supplying power to the first load circuit, and control the second power supply circuit to supply power to the first load circuit, includes:

the first controller 103 being configured to,
in a case where the output voltage of the second power supply circuit B is greater than the preset voltage, control the first power supply branch 101 to be turned off, and control the second power supply branch 102 to be turned on.

The following describes several specific implementations.

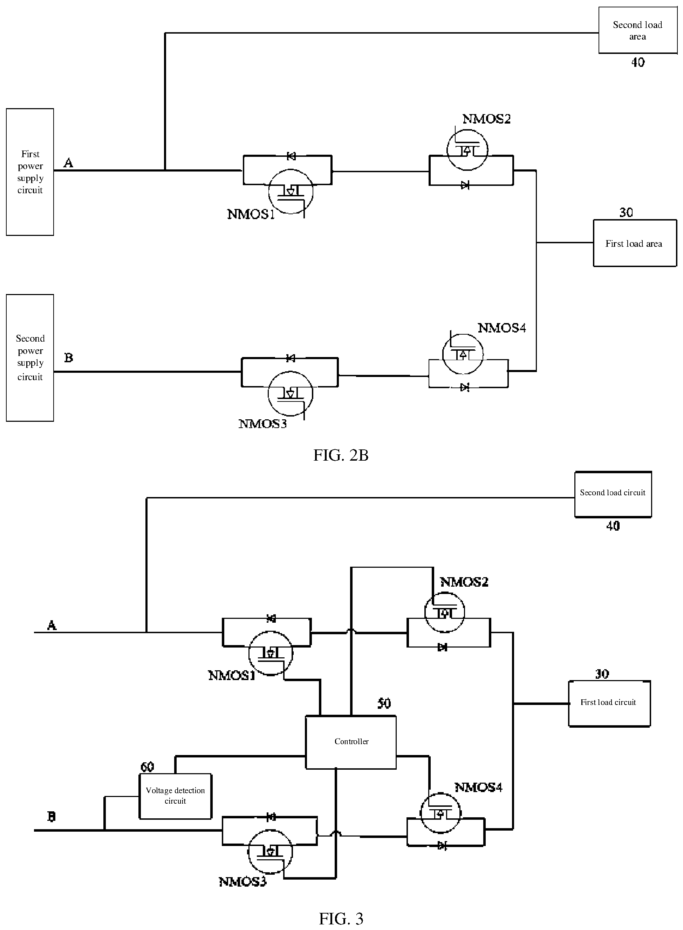

As shown in FIG. 2B, FIG. 2B is a schematic diagram illustrating another computing device according to an embodiment of the present application.

In the computing device provided in the embodiment of the present application, the first power supply branch includes a first controllable switch NMOS 1 and a second controllable switch NMOS2 that are connected in series, and the second power supply branch includes a third controllable switch NMOS3 and a fourth controllable switch NMOS4 that are connected in reverse series.

A first terminal of the first controllable switch NMOS 1 is electrically connected to the output terminal of the first power supply circuit, a second terminal of the first controllable switch NMOS1 is electrically connected to a second terminal of the second controllable switch NMOS2, and a first terminal of the second controllable switch NMOS2 is electrically connected to the input terminal of the second load circuit.

A first terminal of the third controllable switch NMOS3 is electrically connected to the output terminal of the second power supply circuit, a second terminal of the third controllable switch NMOS3 is electrically connected to a second terminal of the fourth controllable switch NMOS4, and a first terminal of the fourth controllable switch NMOS4 is electrically connected to the input terminal of the first load circuit.

The first controller includes two first output terminals. The two first output terminals of the first controller are respectively electrically connected to a control terminal of the first controllable switch NMOS 1 and a control terminal of the second controllable switch NMOS2.

The first controller includes two second output terminals. The two second output terminals of the first controller are respectively electrically connected to a control terminal of the third controllable switch NMOS3 and a control terminal of the fourth controllable switch NMOS4.

The first controller being configured to, in a case where the output voltage of the second power supply circuit is greater than the preset voltage, control the first power supply branch to be turned off and control the second power supply branch to be turned on, includes:
the first controller being configured to,
in a case where the output voltage of the second power supply circuit is greater than the preset voltage, control the first controllable switch NMOS1 and the second controllable switch NMOS2 to be turned off, and control the third controllable switch NMOS3 and the fourth controllable switch NMOS4 to be turned on.

A type of the controllable switch is not specifically limited in the embodiments of the present application. A metal-oxide-semiconductor field-effect transistor (metal-oxide-semiconductor field-effect transistor, MOS) is used as an example for description. Specifically, an NMOS is used as an example. It should be understood that, the controllable switch may be a PMOS or another type of controllable switch other than the MOS.

In order to ensure that the power supply branch can be turned off in both directions, that is, in order to block a bidirectional current, each power supply branch needs to include two controllable switches that are connected in reverse series. Each controllable switch includes a body diode. That is, the body diode serves as an anti-parallel diode of the controllable switch to block a reverse current.

When the first power supply branch supplies power to the first load circuit 30, the first controllable switch NMOS1 and the second controllable switch NMOS2 are turned on, that is, the first power supply circuit A supplies power to the first load circuit 30 via the NMOS1 and NMOS2. Conversely, the first controllable switch NMOS1 and the second controllable switch NMOS2 are turned off.

When the second power supply branch supplies power to the first load circuit 30, the third controllable switch NMOS3 and the fourth controllable switch NMOS4 are turned on, that is, the second power supply circuit B supplies power to the first load circuit 30 via the NMOS3 and the NMOS4. Conversely, the third controllable switch NMOS3 and the fourth controllable switch NMOS4 are turned off.

For example, when the second power supply circuit B supplies power to the first load circuit 30, the NMOS3 and the NMOS4 are turned on, and the NMOS1 and the NMOS2 are turned off. Due to an anti-parallel diode of the NMOS1, although the first power supply circuit A is powered, the first power supply circuit A does not supply power to the first load circuit 30, and due to an anti-parallel diode of the NMOS2, a current from the second power supply circuit B is prevented from flowing into the first power supply branch. It should be understood that when the NMOS2 is turned off, even if the NMOS 1 is turned on, reverse current protection is achieved.

For example, when the second power supply circuit B is unpowered, the first power supply circuit A supplies power to the first load circuit 30. In this case, the NMOS3 and the NMOS4 are turned off, and the NMOS1 and the NMOS2 are turned on. Due to an anti-parallel diode of the NMOS4, a current from the first power supply circuit A is prevented from flowing into the second power supply branch. It should be understood that when the NMOS4 is turned off, even if the NMOS3 is turned on, reverse current protection is achieved.

Based on the foregoing analysis, the computing device provided in the embodiment of the present application enables A or B to independently supply power to the first load circuit 30 without occurrence of a reverse current, thus supplying safe and stable power to the first load circuit.

In addition, the first power supply circuit A is further configured to supply power to the second load circuit 40.

Voltages of the first power supply circuit A and the second power supply circuit B are not specifically limited in the embodiment of the present application. For example, power supply voltages provided by the first power supply circuit A and the second power supply circuit B are both 12 V.

Powers of the first load circuit 30 and the second load circuit 40 are not specifically limited in the embodiment of the present application. In a possible implementation, a required power of the first load circuit 30 is less than that of the second load circuit 40. For example, the required power of the first load circuit 30 is 75 W, and the required power of the second load circuit 40 is greater than 100 W.

A type of a load included in the first load circuit 30 is not specifically limited in the embodiment of the present application. For example, the load may be an FPGA.

As shown in FIG. 3, FIG. 3 is a schematic diagram illustrating another computing device according to an embodiment of the present application.

The computing device provided in the embodiment of the present application further includes a controller 50.

The controller 50 is configured to determine, when the output voltage of the second power supply circuit B is greater than the preset voltage, control the third controllable switch NMOS3 and the fourth controllable switch NMOS4 to be turned on, and control the first controllable switch NMOS 1 and the second controllable switch NMOS2 to be turned off.

The voltage of the second power supply circuit B may be obtained from a voltage detection circuit 60, and the voltage detection circuit 60 sends the detected voltage to the controller 50.

An implementation form of the voltage detection circuit 60 is not specifically limited in the embodiment of the present application. The voltage detection circuit 60 may be implemented by a detection circuit built for an analog circuit, or a voltage detection chip.

In addition, an implementation of the controller is not specifically limited in the embodiment of the present application. The controller 50 may be implemented by a CPLD or a single-chip microcomputer. When the controller 50 is the CPLD or the single-chip microcomputer, the controller 50 further needs to include a drive circuit. The drive circuit is configured to drive a switch state of each controllable switch, that is, turned on or turned off.

The computing device provided in the embodiment of the present application enables power supply of two power supply branches by detecting the voltage of the second power supply circuit, thereby achieving a simple hardware design and simple logic control.

The following describes another power supply implementation.

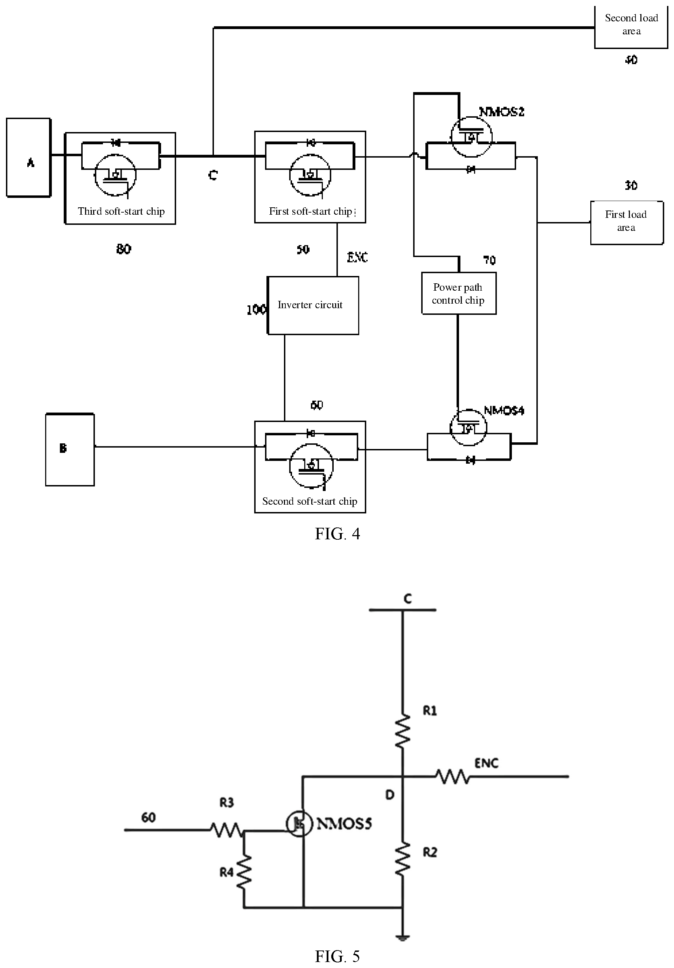

As shown in FIG. 4, FIG. 4 is a schematic diagram illustrating another computing device according to an embodiment of the present application.

The computing device provided in the embodiment of the present application achieves automatic selection between the two power supply branches by using a soft-start chip and a power path control chip 70, and a controller does not need to be configured to control a state of a controllable switch, which makes implementation simpler, simplifies control logic, and lowers costs.

The first power supply branch includes a first soft-start circuit and the second controllable switch NMOS2. The second power supply branch includes a second soft-start chip and the fourth controllable switch NMOS4. As shown in FIG. 4, an example in which the first soft-start circuit includes a first soft-start chip 50 and the second soft-start circuit includes a second soft-start chip 60 is used for description.

An input terminal of the first soft-start chip 50 is electrically connected to the output terminal of the first power supply circuit, an output terminal of the first soft-start chip 50 is electrically connected to a second terminal of the second controllable switch, and a first terminal of the second controllable switch is electrically connected to an input terminal of the second load circuit.

An input terminal of the second soft-start chip 60 is electrically connected to the output terminal of the second power supply circuit, an output terminal of the second soft-start chip 60 is electrically connected to a second terminal of the fourth controllable switch, and a first terminal of the fourth controllable switch is electrically connected to the input terminal of the first load circuit.

A first output terminal of the first controller controls a control terminal of the second controllable switch, and a second output terminal of the first controller controls a control terminal of the fourth controllable switch.

The first controller being configured to, in a case where the output voltage of the second power supply circuit is greater than the preset voltage, control the first power supply branch to be turned off and control the second power supply branch to be turned on, includes:
the first controller being configured to,
in a case where the output voltage of the second power supply circuit B is greater than the preset voltage, control the second controllable switch to be turned off, and control the fourth controllable switch to be turned on.

The first power supply branch includes the first soft-start chip 50 and the second controllable switch NMOS2 that are connected in series. The second power supply branch includes the second soft-start chip 60 and the fourth controllable switch NMOS4 that are connected in series. In the embodiment of the present application, an example in which the controllable switch is an NMOS is still used for description.

A first terminal C of the first soft-start chip 50 is configured to be electrically connected to the first power supply circuit A, and a second terminal of the first soft-start chip 50 is electrically connected to the first load circuit 30 via the second controllable switch NMOS2.

A first terminal of the second soft-start chip 60 is configured to be electrically connected to the second power supply circuit B, and a second terminal of the second soft-start chip 60 is electrically connected to the first load circuit 30 via the fourth controllable switch NMOS4.

In the embodiment of the present application, an example in which the first controller includes the power path control chip 70 is used for description.

The power path control chip 70 is configured to control states of the second controllable switch NMOS2 and the fourth controllable switch NMOS4 based on the voltage of the second power supply circuit B and the voltage of the first power supply circuit A.

An enable signal of the first soft-start chip 50 is generated based on an output voltage of the second soft-start chip 60 and an output voltage of the first power supply circuit A.

A specific implementation of the power path control chip 70 is not specifically limited in the embodiment of the present application. For example, the power path control chip 70 may be implemented by an Oring control chip.

The power path control chip 70 is configured to determine, when the output voltage of the second power supply circuit B is greater than the preset voltage, control the fourth controllable switch NMOS4 to be turned on, and control the second controllable switch NMOS2 to be turned off. Conversely, the power path control chip 70 controls the fourth controllable switch NMOS4 to be turned off, and controls the second controllable switch NMOS2 to be turned on.

When the second soft-start chip 60 has the output voltage, the enable signal of the first soft-start chip 50 is inactive, and the controllable switch in the first soft-start chip 50 is turned off. When the second soft-start chip 60 does not have the output voltage, the enable signal of the first soft-start chip 50 is active, and the controllable switch in the first soft-start chip 50 is turned on.

The second soft-start chip 60 generates an enable signal based on the voltage of the second power supply circuit B. When the second power supply circuit B has the voltage, the enable signal of the second soft-start chip 60 is active, so that the controllable switch in the second soft-start chip 60 is turned on.

By default, the fourth controllable switch NMOS4 is turned off.

The power path control chip 70 controls one of the second controllable switch NMOS2 and the fourth controllable switch NMOS4 to be turned on. Specifically, when the second power supply circuit B is powered, for example, the voltage of the second power supply circuit B is detected, and when the voltage is greater than the preset voltage, it is determined that the second power supply circuit B is powered. In this case, the fourth controllable switch NMOS4 is turned on, that is, when the second power supply circuit B is detected to be powered, the second power supply circuit B is powered and supplies power to the first load circuit 30.

The power path control chip 70, when detecting that the first power supply circuit A is powered and the second power supply circuit B is unpowered, controls the second controllable switch NMOS2 to be turned on, and controls the fourth controllable switch NMOS4 to be turned off. In this case, the first power supply circuit A supplies power to the first load circuit 30.

It should be understood that the power path control chip 70 cannot control the second controllable switch NMOS2 and the fourth controllable switch NMOS4 simultaneously to be turned on.

An operating principle of the soft-start chip is controlled by an enable signal. The soft-start chip has an enable signal triggered by an external source. When the enable signal is active, the controllable switch in the soft-start chip is turned on. When the enable signal is inactive, the controllable switch in the soft-start chip is turned off.

To enable only one power supply branch to be turned on at the same time, an operating state of the first soft-start chip 50 is opposite to that of the second soft-start chip 60. In the embodiment of the present application, the operating state of the second soft-start chip 60 is used to constrain the enable signal of the first soft-start chip 50, so that when the second soft-start chip 60 operates, the first soft-start chip 50 does not operate.

The enable signal of the first soft-start chip 50 is generated based on the output voltage (or output voltage) of the second soft-start chip 60 and the output voltage of the first power supply circuit A. In order to enable only one power supply branch of the first power supply branch and the second power supply branch to be turned on at the same time, when the second power supply circuit B is powered, the second power supply branch is used to supply power to the first load circuit, an output of the second soft-start chip 60 on the second power supply branch controls the enable signal of the first soft-start chip. When the second soft-start chip 60 provides the output, the enable signal of the first soft-start chip is inactive. Therefore, even if the first soft-start chip has a voltage in the first power supply circuit A, the first power supply branch may not be turned on to supply power to the first load circuit.

In the computing device provided in the embodiment of the present application, the power supply control circuit further includes an inverter circuit.

An input terminal of the inverter circuit is electrically connected to a first terminal or a second terminal of the second soft-start circuit. An output terminal of the inverter circuit is electrically connected to a control terminal of the first soft-start circuit; a first power supply terminal of the inverter circuit is electrically connected to the output terminal of the first power supply circuit; and a second power supply terminal of the inverter circuit is electrically connected to ground.

In a possible implementation, the power supply control circuit includes a first power supply branch, a second power supply branch, and an inverter circuit. The first power supply branch includes a first soft-start circuit and a first diode. The second power supply branch includes a second soft-start circuit chip and a second diode.

An input terminal of the first soft-start circuit is electrically connected to the output terminal of the first power supply circuit, an output terminal of the first soft-start circuit is electrically connected to a first terminal of the first diode, and a second terminal of the first diode is electrically connected to the input terminal of the second load circuit.

An input terminal of the second soft-start circuit is electrically connected to the output terminal of the second power supply circuit, an output terminal of the second soft-start circuit is electrically connected to a first terminal of the second diode, and a second terminal of the second diode is electrically connected to the input terminal of the first load circuit.

An input terminal of the inverter circuit is electrically connected to a first terminal or a second terminal of the second soft-start circuit, and an output terminal of the inverter circuit is electrically connected to a control terminal of the first soft-start circuit.

The output terminal of the inverter circuit is electrically connected to the control terminal of the first soft-start circuit. A first power supply terminal of the inverter circuit is electrically connected to the output terminal of the first power supply circuit, and a second power supply terminal of the inverter circuit is electrically connected to ground.

To facilitate understanding of operating states of the first soft-start chip 50 and the second soft-start chip 60, the following makes a detailed description with reference to the accompanying drawings. As shown in FIG. 5, FIG. 5 is a schematic diagram illustrating an inverter circuit of a first soft-start chip according to an embodiment of the present application.

The inverter circuit of the first soft-start chip includes a fifth controllable switch NMOS5. In the embodiment of the present application, the NMOS is used as an example for description.

A control terminal of the fifth controllable switch NMSOS is electrically connected to the second terminal of the second soft-start chip 60 via a third resistor, and the first terminal of the second soft-start chip 60 is electrically connected to the second power supply circuit. The control terminal of the fifth controllable switch NMSOS is electrically connected to ground via a fourth resistor R4.

A first terminal D of the fifth controllable switch NMSOS is connected to the first terminal C of the first soft-start chip via a first resistor R1, the first terminal C of the first soft-start chip is electrically connected to the first power supply circuit, and the first terminal D of the fifth controllable switch NMSOS is electrically connected to the ground via a second resistor R2. A second terminal of the fifth controllable switch NMSOS is electrically connected to ground.

The first terminal D of the fifth controllable switch NMSOS is used as an output terminal of an enable signal. In order to limit a current, the first terminal D of the fifth controllable switch NMSOS outputs an enable signal ENC of the first soft-start chip via a resistor.

The following describes the operating principle of the inverter circuit.

When the second soft-start chip 60 operates, an output voltage is applied to the control terminal of the NMOS5, so that the NMOS5 is turned on. As a result, a potential at point D is pulled down to the ground, so that ENC is low, the enable signal is inactive, and the first soft-start chip does not operate. The second power supply circuit supplies power to the first load circuit via the second power supply branch.

When the second soft-start chip 60 does not operate and no output voltage is present, the NMOS5 is turned off. Since a voltage at point C is continuously present, a voltage at point D is a voltage divided by R1 and R2, so that ENC is high, the enable signal is active, and the first soft-start chip operates. The first power supply circuit supplies power to the first load circuit via the first power supply branch.

In another implementation, the computing device provided in the embodiment of the present application further includes a third soft-start chip 80.

The first soft-start chip 50 is electrically connected to the first power supply circuit A via the third soft-start chip 80.

The first power supply circuit A is further configured to supply power to the second load circuit 40 of the computing device via the third soft-start chip 80. The third soft-start chip automatically detects the voltage of the first power supply circuit. When the detected voltage of the first power supply circuit is greater than the preset voltage, the enable signal is active, and an internal controllable switch is controlled to be turned on, thereby enabling automatic startup.

The third soft-start chip 80 is used to prevent an inrush current to a subsequent component when the first power supply circuit A is powered on. For example, when the first power supply circuit A is hot-plugged, the third soft-start chip 80 may prevent the inrush current.

The reverse current protection devices in the foregoing embodiments are all controllable switches. The following describes an implementation in which a diode is used to achieve reverse current protection.

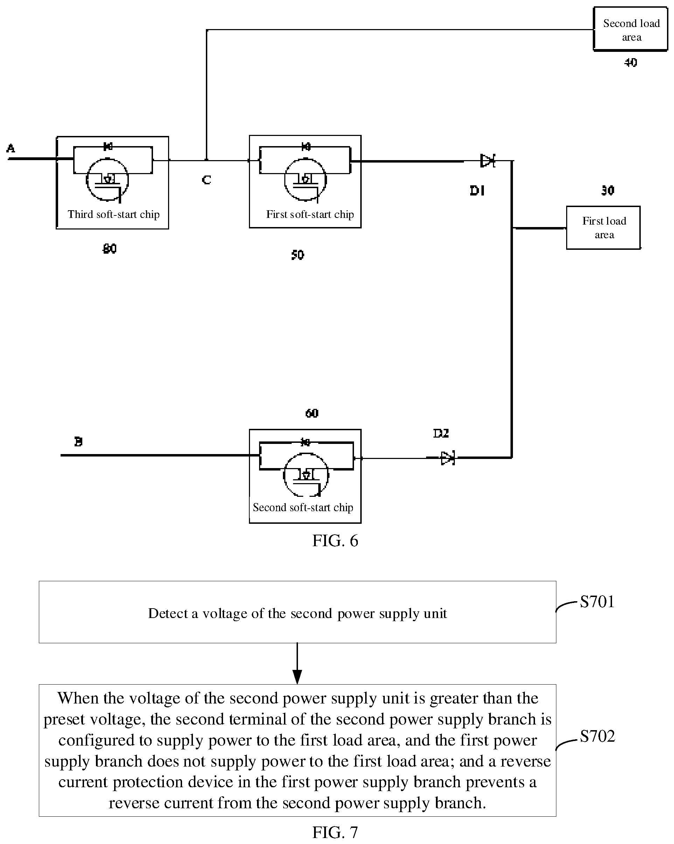

As shown in FIG. 6, FIG. 6 is a schematic diagram illustrating another computing device according to an embodiment of the present application.

A difference between the computing device provided in the embodiment of the present application and that in FIG. 4 is that the NMOS2 is replaced with a first diode D1, and the NMOS4 is replaced with a second diode D2. In the embodiment of the present application, an example in which the soft-start circuit is implemented by a soft-start chip is further used for description.

The first power supply branch includes the first soft-start chip 50 and the first diode D1 that are connected in series. The second power supply branch includes the second soft-start chip 60 and the second diode D2 that are connected in series.

The power supply control circuit includes a first power supply branch, a second power supply branch, and an inverter circuit. The first power supply branch includes the first soft-start circuit and the first diode. The second power supply branch includes the second soft-start circuit chip and the second diode D2.

The input terminal of the first soft-start chip 50 is electrically connected to the output terminal of the first power supply circuit, the output terminal of the first soft-start chip 50 is electrically connected to a first terminal of the first diode D1, and a second terminal of the first diode D1 is electrically connected to the input terminal of the second load circuit.

The input terminal of the second soft-start chip 60 is electrically connected to the output terminal of the second power supply circuit, the output terminal of the second soft-start chip 60 is electrically connected to a first terminal of the second diode D2, and a second terminal of the second diode D2 is electrically connected to the input terminal of the first load circuit.

An input terminal of the inverter circuit 100 is electrically connected to the first terminal or the second terminal of the second soft-start chip 60. The output terminal of the inverter circuit 100 is electrically connected to the control terminal of the first soft-start chip 50.

A first power supply terminal of the inverter circuit 100 is electrically connected to the control terminal of the first power supply circuit. A second power supply terminal of the inverter circuit 100 is electrically connected to ground.

When the first power supply branch supplies power to the first load circuit 30, the controllable switch in the first soft-start chip 50 is turned on, and the controllable switch in the second soft-start chip 60 is turned off.

When the second power supply branch supplies power to the first load circuit 30, the controllable switch in the second soft-start chip 60 is turned on, and the controllable switch in the first soft-start chip 50 is turned off.

Due to a unidirectional conduction characteristic of the diode, a current can flow only from an anode to a cathode. For example, when the second power supply branch supplies power to the first load circuit 30, due to D1, a power supply current from the second power supply branch is prevented from flowing into the first power supply branch. When the first power supply branch supplies power to the first load circuit 30, due to D2, a power supply current from the first power supply branch is prevented from flowing into the second power supply branch.

It should be understood that, compared with the controllable switch, the diode has a lower cost, does not require control, and can automatically achieve a reverse blocking function.

Based on the computing device provided in the foregoing embodiment, an embodiment of the present application further provides a method for controlling the computing device, which is described in detail below with reference to the accompanying drawings.

As shown in FIG. 7, FIG. 7 is a flowchart illustrating a method for controlling a computing device according to an embodiment of the present application.

In the method for controlling the computing device provided in the embodiment of the present application, the computing device includes a first power supply branch and a second power supply branch. A first terminal of the first power supply branch is configured to be electrically connected to a first power supply circuit, and a second terminal of the first power supply branch is configured to supply power to a first load circuit in the computing device. A first terminal of the second power supply branch is configured to be electrically connected to a second power supply circuit, and a second terminal of the second power supply branch is configured to supply power to the first load circuit. The first power supply branch and the second power supply branch each include a reverse current protection device, and the reverse current protection device includes a controllable switch or a diode.

The method includes the following steps.

S701: A voltage of the second power supply circuit is detected.

According to the control method provided in the embodiment of the present application, when the second power supply circuit is powered, the second power supply circuit is preferentially used to supply power to the first load circuit. Therefore, preferential power supply may be achieved by detecting the voltage of the second power supply circuit.

In the embodiment of the present application, a power source of the first power supply circuit is not specifically limited, and may be derived from a power supply cable. A power source of the second power supply circuit may be derived from a PCIe adapter card.

S702: When the voltage of the second power supply circuit is greater than the preset voltage, the second terminal of the second power supply branch is configured to supply power to the first load circuit, and the first power supply branch does not supply power to the first load circuit; and a reverse current protection device in the first power supply branch prevents a reverse current from the second power supply branch.

The second power supply circuit may occasionally be powered off. The power source of the second power supply circuit may be derived from various adapter interfaces, for example, the PCIe adapter card. Since the user may arbitrarily plug into an interface, the interface selected by the user may be unpowered or incapable of supplying sufficient power. Therefore, the second power supply circuit may be powered and capable of supplying sufficient power, unpowered, or powered but incapable of supplying sufficient power.

When the second power supply circuit is powered, the second power supply circuit is preferentially used to supply power to the first load circuit. The first power supply circuit may supply power to the second load circuit. When the second power supply circuit is unpowered, the first power supply circuit supplies power to the first load circuit and the second load circuit.

The first power supply branch and the second power supply branch each include a reverse current protection device, and the reverse current protection device includes a controllable switch or a diode.

Any one of the power supply branches is used as an example. It should be understood that, in order to prevent a reverse current, when the reverse current protection device includes a diode, a cathode of the diode is close to and electrically connected to the first load circuit, and an anode of the diode is close to and electrically connected to a power supply unit. When the power supply branch includes a controllable switch, the controllable switch includes an anti-parallel diode. Since the first power supply circuit is continuously powered, the first power supply circuit does not supply power to the first load circuit, and only the second power supply circuit supplies power to the first load circuit, and the current from the first power supply circuit needs to be blocked in both directions.

When the first power supply branch supplies power to the first load circuit, the reverse current protection device in the second power supply branch is configured to prevent the reverse current from the first power supply branch. When the second power supply branch supplies power to the first load circuit, the reverse current protection device in the first power supply branch prevents the reverse current from the second power supply branch.

The computing device provided in the embodiment of the present application includes two power supply branches. One of the two power supply branches may supply power to the first load circuit. When the second power supply branch is powered, the second power supply branch supplies power to the first load circuit. When the second power supply branch is unpowered, the first power supply branch supplies power to the first load circuit, thereby achieving power redundancy for the first load circuit. Because the first power supply branch and the second power supply branch each include a reverse current protection device, a power supply branch not supplying power can prevent a reverse current. The technical solution does not need to configure DC/DC circuits on the two power supply branches, nor does it need current sharing control, thereby simplifying the circuit structure, reducing the circuit area, and shortening the development cycle.

According to the control method provided in the embodiment of the present application, when the voltage of the second power supply circuit is less than or equal to the preset voltage, and the first power supply branch supplies power to the first load circuit, the reverse current protection device in the second power supply branch is configured to prevent the reverse current from the first power supply branch. The first power supply branch is further configured to supply power to the second load circuit.

In a possible implementation, the first power supply branch includes a first controllable switch and a second controllable switch that are connected in reverse series. The second power supply branch includes a third controllable switch and a fourth controllable switch that are connected in reverse series.

When the first power supply branch supplies power to the first load circuit, the first controllable switch and the second controllable switch are controlled to be turned on. Conversely, the first controllable switch and the second controllable switch are controlled to be turned off.

When the second power supply branch supplies power to the first load circuit, the third controllable switch and the fourth controllable switch are controlled to be turned on. Conversely, the third controllable switch and the fourth controllable switch are controlled to be turned off.

The computing device includes a controller. The controller, when the voltage of the second power supply circuit is greater than the preset voltage, controls the third controllable switch and the fourth controllable switch to be turned on, and controls the first controllable switch and the second controllable switch to be turned off.

In another possible implementation, the first power supply branch includes a first soft-start chip and a second controllable switch that are connected in series; the second power supply branch includes a second soft-start chip and a fourth controllable switch that are connected in series; a first terminal of the first soft-start chip is configured to be electrically connected to the first power supply circuit, and a second terminal of the first soft-start chip is electrically connected to the first load circuit via the second controllable switch; a first terminal of the second soft-start chip is configured to be electrically connected to the second power supply circuit, and a second terminal of the second soft-start chip is electrically connected to the first load circuit via the fourth controllable switch.

The computing device further includes a power path control chip.

The power path control chip controls states of the second controllable switch and the fourth controllable switch based on the voltage of the second power supply circuit and the voltage of the first power supply circuit; and the output voltage of the second soft-start chip and the output voltage of the first power supply circuit generate an enable signal of the first soft-start chip.

Specifically, when the voltage of the second power supply circuit is greater than the preset voltage, the power path control chip controls the fourth switching transistor to be turned on, and controls the second controllable switch to be turned off. Conversely, the fourth controllable switch is controlled to be turned off, and the second controllable switch is controlled to be turned on; when the second soft-start chip has the output voltage, the enable signal of the first soft-start chip is inactive, and the controllable switch in the first soft-start chip is turned off; when the second soft-start chip does not have the output voltage, the enable signal of the first soft-start chip is active, and the controllable switch in the first soft-start chip is turned on; the second soft-start chip generates an enable signal based on the voltage of the second power supply circuit. When the second power supply circuit has the voltage, the enable signal of the second soft-start chip is active, so that the controllable switch in the second soft-start chip is turned on.

The first power supply branch includes a first soft-start chip and a first diode that are connected in series; the second power supply branch includes a second soft-start chip and a second diode that are connected in series; when the first power supply branch supplies power to the first load circuit, the controllable switch in the first soft-start chip is controlled to be turned on, and the controllable switch in the second soft-start chip to be turned off; when the second power supply branch supplies power to the first load circuit, the controllable switch in the second soft-start chip is controlled to be turned on, and the controllable switch in the first soft-start chip to be turned off.

In another possible implementation, the computing device further includes a third soft-start chip.

The first soft-start chip is electrically connected to the first power supply circuit via the third soft-start chip.

The first power supply circuit supplies power to the second load circuit of the computing device via the third soft-start chip. That is, the third soft-start chip automatically detects the voltage of the first power supply circuit. When the detected voltage of the first power supply circuit is greater than the preset voltage, the enable signal is active, and an internal controllable switch is controlled to be turned on, thereby enabling automatic startup.

The foregoing is only a preferred embodiment of the present application, and is not intended to limit the present application in any form. Although the present application has been disclosed in the preferred embodiment as described above, it is not intended to limit the present application. Those skilled in the art may make many possible changes and modifications to the technical solutions of the present application by using the methods and technical contents disclosed above without departing from the scope of the technical solutions of the present application, or modify the technical solutions of the present application to equivalent embodiments with equivalent changes. Therefore, any simple amendments, equivalent changes, or modifications made to the foregoing embodiments based on the technical essence of the present application that does not depart from the technical solutions of the present application still fall within the protection scope of the technical solutions of the present application.

## Claims

1. A computing device, comprising a first power supply circuit, a second power supply circuit, a power supply control circuit, a first load circuit, and a second load circuit;
wherein an output terminal of the first power supply circuit is electrically connected to a first input terminal of the power supply control circuit;
an output terminal of the second power supply circuit is electrically connected to a second input terminal of the power supply control circuit;
a first output terminal of the power supply control circuit is electrically connected to an input terminal of the first load circuit; and
a second output terminal of the power supply control circuit is electrically connected to an input terminal of the second load circuit;
wherein the power supply control circuit is configured to,
determine whether an output voltage of the second power supply circuit is greater than a preset voltage; and
in a case where the output voltage of the second power supply circuit is greater than the preset voltage, control the first power supply circuit to stop supplying power to the first load circuit, and control the second power supply circuit to supply power to the first load circuit.

2. The computing device according to claim 1, wherein the power supply control circuit comprises a first power supply branch, a second power supply branch, and a first controller;
wherein the output terminal of the first power supply circuit is electrically connected to an input terminal of the first power supply branch, and an output terminal of the first power supply branch is electrically connected to the input terminal of the second load circuit;
wherein the output terminal of the second power supply circuit is electrically connected to an input terminal of the second power supply branch, and an output terminal of the second power supply branch is electrically connected to the input terminal of the first load circuit;
wherein a first output terminal of the first controller is electrically connected to a control terminal of the first power supply branch, and a second output terminal of the first controller is electrically connected to a control terminal of the second power supply branch;
wherein the power supply control circuit being configured to, in a case where the output voltage of the second power supply circuit is greater than the preset voltage, control the first power supply branch to stop supplying power to the first load circuit, and control the second power supply circuit to supply power to the first load circuit, comprises:
the first controller being configured to,
in a case where the output voltage of the second power supply circuit is greater than the preset voltage, control the first power supply branch to be turned off, and control the second power supply branch to be turned on.

3. The computing device according to claim 2, wherein the first power supply branch comprises a first controllable switch and a second controllable switch, and the second power supply branch comprises a third controllable switch and a fourth controllable switch;
wherein a first terminal of the first controllable switch is electrically connected to the output terminal of the first power supply circuit, a second terminal of the first controllable switch is electrically connected to a second terminal of the second controllable switch, and a first terminal of the second controllable switch is electrically connected to the input terminal of the second load circuit;
wherein a first terminal of the third controllable switch is electrically connected to the output terminal of the second power supply circuit, a second terminal of the third controllable switch is electrically connected to a second terminal of the fourth controllable switch, and a first terminal of the fourth controllable switch is electrically connected to the input terminal of the first load circuit;
wherein the first controller comprises two first output terminals, wherein the two first output terminals of the first controller are respectively electrically connected to a control terminal of the first controllable switch and a control terminal of the second controllable switch;
wherein the first controller comprises two second output terminals, wherein the two second output terminals of the first controller are respectively electrically connected to a control terminal of the third controllable switch and a control terminal of the fourth controllable switch;
wherein the first controller being configured to, in a case where the output voltage of the second power supply circuit is greater than the preset voltage, control the first power supply branch to be turned off and control the second power supply branch to be turned on, comprises:
the first controller being configured to,
in a case where the output voltage of the second power supply circuit is greater than the preset voltage, control the first controllable switch and the second controllable switch to be turned off, and control the third controllable switch and the fourth controllable switch to be turned on.

4. The computing device according to claim 2, wherein the first power supply branch comprises a first soft-start circuit and a second controllable switch, and the second power supply branch comprises a second soft-start chip and a fourth controllable switch;
wherein an input terminal of the first soft-start circuit is electrically connected to the output terminal of the first power supply circuit, an output terminal of the first soft-start circuit is electrically connected to a second terminal of the second controllable switch, and a first terminal of the second controllable switch is electrically connected to the input terminal of the second load circuit;
wherein an input terminal of the second soft-start circuit is electrically connected to the output terminal of the second power supply circuit, an output terminal of the second soft-start circuit is electrically connected to a second terminal of the fourth controllable switch, and a first terminal of the fourth controllable switch is electrically connected to the input terminal of the first load circuit;
wherein the first output terminal of the first controller controls a control terminal of the second controllable switch; and the second output terminal of the first controller controls a control terminal of the fourth controllable switch;
wherein the first controller being configured to, in a case where the output voltage of the second power supply circuit is greater than the preset voltage, control the first power supply branch to be turned off and control the second power supply branch to be turned on, comprises:
the first controller being configured to,
in a case where the output voltage of the second power supply circuit is greater than the preset voltage, control the second controllable switch to be turned off, and control the fourth controllable switch to be turned on.

5. The computing device according to claim 4, wherein the power supply control circuit further comprises an inverter circuit;
an input terminal of the inverter circuit is electrically connected to a first terminal or a second terminal of the second soft-start circuit; an output terminal of the inverter circuit is electrically connected to a control terminal of the first soft-start circuit; a first power supply terminal of the inverter circuit is electrically connected to the output terminal of the first power supply circuit; and a second power supply terminal of the inverter circuit is electrically connected to ground.

6. The computing device according to claim 1, wherein the power supply control circuit comprises a first power supply branch, a second power supply branch, and an inverter circuit; the first power supply branch comprises a first soft-start circuit and a first diode; and the second power supply control branch comprises a second soft-start circuit and a second diode;
wherein an input terminal of the first soft-start circuit is electrically connected to the output terminal of the first power supply circuit; an output terminal of the first soft-start circuit is electrically connected to a first terminal of the first diode, and a second terminal of the first diode is electrically connected to the input terminal of the second load circuit;
wherein an input terminal of the second soft-start circuit is electrically connected to the output terminal of the second power supply circuit, an output terminal of the second soft-start circuit is electrically connected to a first terminal of the second diode, and a second terminal of the second diode is electrically connected to the input terminal of the first load circuit;
wherein an input terminal of the inverter circuit is electrically connected to a first terminal or a second terminal of the second soft-start circuit; and an output terminal of the inverter circuit is electrically connected to a control terminal of the first soft-start circuit;
wherein a first power supply terminal of the inverter circuit is electrically connected to the output terminal of the first power supply circuit; and a second power supply terminal of the inverter circuit is electrically connected to ground.

7. The computing device according to claim 5 or 6, wherein the inverter circuit comprises a first resistor, a second resistor, a third resistor, a fourth resistor, a fifth resistor, and a fifth switch;
wherein a first terminal of the first resistor is electrically connected to the output terminal of the first power supply circuit; a second terminal of the first resistor, a first terminal of the second resistor, a first terminal of the fifth resistor, and a first terminal of the fifth switch are electrically connected;
a first terminal of the third resistor is electrically connected to a control terminal of the second soft-start circuit; a second terminal of the third resistor, a first terminal of the fourth resistor, and a control terminal of the fifth switch are electrically connected; a second terminal of the second resistor, a second terminal of the fourth resistor, and a second terminal of the fifth switch are electrically connected to ground; and
a second terminal of the fifth resistor is electrically connected to the control terminal of the first soft-start circuit.

8. The computing device according to any one of claims 4 to 7, wherein the power supply control circuit further comprises a third soft-start circuit;
wherein an input terminal of the third soft-start circuit is electrically connected to the output terminal of the first power supply circuit; and an output terminal of the third soft-start circuit, the input terminal of the first soft-start circuit, and the input terminal of the second load circuit are electrically connected.

9. The computing device according to any one of claims 1 to 8, wherein the power supply control circuit is further configured to, in a case where the output voltage of the second power supply circuit is less than or equal to the preset voltage, control the first power supply circuit to supply power to the first load circuit and the second load circuit.

10. The computing device according to any one of claims 1 to 9, wherein the first load circuit and the second load circuit are located on a data processing unit DPU board card.
